# EUROPÄISCHE PATENTSCHRIFT

(11) **EP 1 806 222 B1**
(45) Veröffentlichungstag und Bekanntmachung des Hinweises auf die Patenterteilung: **21.11.2012**
(21) Anmeldenummer: 07000354.6
(22) Anmeldetag: 09.01.2007
(51) Int. Cl.: B32B 5/06, D04H 13/00, D06N 7/00, E04F 13/16, E04F 13/08, E04F 15/10, E04F 15/16

(54) **Abriebfester, wasserfester Boden- und Wandbelag**
Abrasion resistant waterproof floor and wall covering
Revêtement de sol et de mur résistant ä l'abrasion et étanche à l'eau

(30) Priorität: 09.01.2006 DE 102006001094
(43) Veröffentlichungstag der Anmeldung: 11.07.2007
(73) Patentinhaber: TESCH, Günter, 1700 Fribourg (CH)
(72) Erfinder: TESCH, Günter, 1700 Fribourg (CH)
(74) Vertreter: Lesser, Karl-Bolko

(56) Entgegenhaltungen:
- WO-A-93/22487
- DE-A- 60 015
- DE-A1- 4 244 250
- GB-A- 105 864

## Beschreibung

Die Erfindung betrifft einen abriebfesten, wasserfesten Boden- und Wandbelag nach Oberbegriff des Anspruches 1.

### Stand der Technik

Linoleum wird schon sehr lange hergestellt und es wird auch schon sehr lange daran gearbeitet einen linoleum-ähnlichen Boden- und Wandbelag herzustellen.

Das herkömmliche Linoleum besteht im Wesentlichen aus einem Gemisch aus Leinöl und gemahlenem Kork und weiteren unterschiedlichen Bestandteilen, das auf einer Trägerschicht, insbesondere ein Gewebe aufgetragen wird. Das aufgetragene und abgebundene Gemisch aus nachwachsenden Rohstoffen bildet eine wasserdichte Deck- und Sichtschicht.

Der gesamte Produktionsprozess dauert bei der Produktion von Linoleum insbesondere wegen der langen Reifezeit des Linoleums sehr lange, weshalb schon vor weit über 100 Jahren nach einem Verfahren gesucht wurde einen linoleum-ähnlichen Boden- und Wandbelag herzustellen.

In der DE 97 932 aus dem Jahre 1897 wird beschrieben, dass es damals schon bekannt war, den Kork durch andere Stoffe zu ersetzen, und auf die DE 60 015 verwiesen, in der beschrieben ist, anstelle des Korkes gemahlenes Leder in Form von Rohleder einzusetzen. Die DE 97 932 selbst lehrt, anstelle des gemahlenen Korkes bzw. des gemahlenen Rohleders geröstetes Leder in fein gemahlenen Zustand (sogenannte Lederkohle oder Ledermehl) zu benutzen, dieses mit oxidierten Leinöl und eventuell von Klebemitteln und Harzen zu einem steifen Brei zu mischen und diesen Brei auf ein festes, grobes Gewebe so aufzutragen, dass das Gewebe nicht hervortritt. Das Ganze wird dann noch dicht gewalzt oder gepresst.

Das Linoleum und auch die bisher bekannten linoleum-ähnlichen Bodenbeläge sind relativ schwer, insbesondere aber auch schwer zu verlegen. Auch sind die Herstellungsverfahren sehr aufwendig.

Die alte Herstellungsmethode von Linoleum wurde bisher nie richtig modernisiert und es sind immer noch riesige Produktionsräume sowohl flächen- als auch höhenmäßig notwendig, da die Bindemittelreifung sehr viel Zeit in Anspruch nimmt und die zu reifenden Linoleum-Bahnen in der Regel hängend angeordnet sind. Dadurch ist die Produktion relativ langwierig und in Partiegröße und schneller Nachlieferung begrenzt. Deshalb gibt es weltweit nur sehr wenige Produktionsanlagen für Linoleum.

Die ursprüngliche Idee nachwachsende Rohstoffe und luftenthaltenden Rindenkork zu verwenden, wurde durch das Mahlen des Korkes und damit das einhergehende Beseitigen der an sich günstigen Lufteinschlüsse technisch falsch gelöst. Der Ersatz des Korkes durch leichter färbbares Holzmehl war ein Versuch, der jedoch zu schlechteren Eigenschaften des Linoleums führte.

Auch gelang nie ein Übergang zu moderneren Fertigungsmethoden. Die Musterungsmöglichkeiten sind auf einfarbige, jasperierte und moirierte Optiken begrenzt.

Elastischere Rückenschichten lassen sich kaum ohne ein Trennungsrisiko anbringen. Trotz Berühmung als elastischer Bodenbelag ist Linoleum ein Produkt mit einem niedrigen Dezibel-Wert in der Trittschallminderung. Bei der Verlegung von Linoleum müssen die Nähte zwischen benachbarten Bahnen mit einer Verschweißung versehen werden, was nicht immer optimal vom Verleger zu erreichen ist. Um die Oberfläche dauerhaft erhalten zu können wird heutzutage auf das Linoleum eine relativ teure Polyurethan-Beschichtung aufgetragen.

All dies führt dazu, dass Linoleum ein sehr teurer Bodenbelag ist.

### Erfindung

Der Erfindung liegt deshalb die Aufgabe zugrunde einen gattungsgemäßen linoleum-ähnlichen Boden- und Wandbelag zu schaffen, der nicht nur leichter als herkömmliche Linoleum- oder linoleum-ähnliche Bodenbeläge ist, sondern der sich aufgrund der Verwendung ganz anderer Verfahren auch einfacher und preiswerter herstellen, verlegen und pflegen lässt.

Diese Aufgabe wird durch die im Anspruch 1 beschriebene Erfindung gelöst. Erfindungsgemäß ist ein abriebfester, wasserfester Boden- und Wandbelag im wesentlichen aus nachwachsenden Rohstoffen mit einer Deck- und Sichtschicht und mit einer Trägerschicht so ausgebildet, dass die Deck- und Sichtschicht zumindest passiv vernadelbare Lederteilchen aufweist, die mit der Trägerschicht mittels Vernadelungs-Fasern vernadelt und mittels einer Bindemasse abgebunden sind, wobei mindestens die Oberfläche der Deck- und Sichtschicht abrieb- und wasserfest ausgebildet ist.

Dadurch wird ein Boden- und Wandbelag zur Verfügung gestellt, der ähnlich dem bekannten Linoleum aus nachwachsenden Rohstoffen besteht, wasserdicht ist und bei dem z.B. Lederabfälle wieder verwertet werden können. Durch das Vernadeln werden die Lederteilchen gegenüber der Trägerschicht gehalten.

Dieser Boden- und Wandbelag mit einem hohen Anteil an nachwachsenden Rohstoffen kann kontinuierlich und gut kontrollierbar in großen Partien hergestellt werden. Leder mit seiner natürlichen Elastizität und Ausgleichsmöglichkeit von Luftfeuchte und auch Geruchsaufnahmefähigkeit ähnlich natürlicher Wolle macht es zu einem wertvollen Rohstoff, der allerdings bisher noch nicht zu einem erfolgreich haltbaren und leicht verlegbaren Boden- und Wandbelag verarbeitet werden konnte.

Dies wird nun insbesondere durch die Vernadelung erreicht, durch die sich weitere Gestaltungsmöglichkeiten eröffnen, dies sich aus den folgenden Darstellungen ergeben.

Die Deck- und Sichtschicht weist zwischen 40% und 80% Lederteilchen auf.

Die Lederteilchen sind kleine Lederspäne, die durch Raspeln, Mahlen oder ähnliche Zerkleinerungsprozesse aus vorzugsweise Lederresten erfolgen können.

Die Lederteilchen können schmale Lederspäne mit einer Länge von 3 bis 20 mm sein. Diese haben einen Querschnitt von z.B. 1 bis 3 mm, wobei sie zumindest passiv nadelfähig sein sollen.

Das Vernadeln der Lederteilchen kann dadurch erreicht werden, dass der Boden- und Wandbelag aktiv vernadelbare textile Fasern, vorzugsweise auf und in der Deck- und Sichtschicht aufweist.

Auch kann die Deck- und Sichtschicht neben den Lederteilchen noch Fasern, insbesondere Wollfasern, Jute- oder Baumwollfasern aufweisen. Diese Fasern sind grob oder fein, farbig und weisen vorzugsweise unterschiedliche Farben auf.

Vorzugsweise kann die Oberfläche der Deck- und Sichtschicht durch einen gezielten Nadelprozess strukturiert sein, auch kann die Optik der Deck- und Sichtschicht ganz oder zumindest zum Teil durch die Wahl der Vernadelungs-Fasern beeinflusst sein. So kann zumindest ein Teil der Vernadelungs-Fasern farbig sein.

Sind hingegen die Vernadelungs-Fasern fein und gleichfarbig mit den Lederteilchen ausgebildet, so treten sie optisch kaum in Erscheinung. Die Lederteilchen selbst können ungefärbt oder speziell gefärbt sein, es kann auch ein Gemisch von ungefärbten und gefärbten Lederteilchen vorliegen, um gezielt bestimmte Musterungseffekte zu erzielen. Insbesondere empfiehlt es sich dann farblich und / oder größenmäßig voneinander unterschiedliche Lederteilchen muster-und kontrastbildend in der Deck- und Sichtschicht anzuordnen.

Die Lederteilchen können mit anderen passiv oder aktiv nadelbaren kleinen Stückchen in der Deck- und Sichtschicht gemischt vorliegen, wobei diese z.B. Faserkugeln, Holzteilchen, Kunststoffteilchen oder Textilteilchen sein können.

Vorzugsweise sind die textilen Fasern natürliche und / oder künstliche Fasern, die aktiv nadelfähig sind.

Die Trägerschicht kann aus einem Gelege, einem Gewebe, einem Spunbond oder aus einem Non-woven bestehen und muss dazu geeignet sein, zumindest passiv vernadelt zu werden.

Die Bindermasse kann aus einem tierischen oder pflanzlichem Leim, aus Stärke oder Stärkederivaten bestehen, bevorzugt besteht sie aber aus einem Naturlatex, einem synthetischen Latex oder einem flüssig eingebrachten und abgebundenen Polyurethan.

Alternativ besteht die Bindermasse aus einem transparenten polymeren Material, durch das die Lederteilchen und die Fasern sichtbar sind. Dabei kann die Bindermasse auch aus einem Gemisch verschiedener Polymere bestehen.

Gemäß einer speziellen Ausführungsform der Erfindung können der Bindermasse bindungsverstärkende und / oder abriebverhindernde Stoffe beigemischt sein. Der Bindermasse können aber auch Farbstoffe in Lösungsform und / oder Pigmentform beigemischt sein. Andere Effekte werden erzielt, wenn der Bindermasse optisch wirksame Partikel, wie Glitzer usw., beigemischt sind.

Gemäß einer bevorzugten Ausführungsform ist auf der Deck- und Sichtschicht eine Lage einer besonders abriebfesten Polymer-Schicht angeordnet sind, die z.B. aus einem Acrylat, einem Polyurethan, Polyethylen und dessen Derivaten, aus einem anderen Polymer oder aus einem Gemisch derselben bestehen kann.

Diese auf der Deck- und Sichtschicht angeordnete besonders abriebfeste Polymer-Schicht ist in Form eines Filmes oder in Pulverform auf die Deck- und Sichtschicht aufgebracht.

Die auf der Deck- und Sichtschicht angeordnete besonders abriebfeste Polymer-Schicht kann farbig ausgebildet sein, sie kann darüber hinaus durch nichttransparente Farbeffekte die Optik der Deck- und Sichtschicht verändern.

Die Farbeffekte sind durch Drucken, Sprühen od. dgl. erzeugt.

Andererseits kann die auf der Deck- und Sichtschicht angeordnete besonders abriebfeste Polymer-Schicht transparent sein, wodurch die Optik der Deck- und Sichtschicht voll zur Wirkung kommt.

Die abriebfeste Masse wurde bei der Herstellung z.B. als Pulver in die mindestens die Lederteilchen aufweisende Deck- und Sichtschicht eingebracht und dort mit den Lederteilchen und den Vernadelungs-Fasern verbunden.

Während die abriebfeste Masse zum einen den Boden- und Wandbelag von der Sichtseite her wasserdicht machen soll, ist es vorteilhaft, dass sie dampfdurchlässig ist.

Im Folgenden wird die Erfindung anhand einer Ausführungsform näher erläutert.

### Ausführungsbeispiel

Auf einer Trägerschicht, die ein passiv nadelfähiges Flächengebilde ist, wie ein Gelege, ein Gewebe, ein Spunbond oder ein Non-woven, ist eine Deck- und Sichtschicht mit zumindest passiv vernadelbaren Lederteilchen angeordnet und mit der Trägerschicht mittels aktiv vernadelbarer, textilen Fasern vernadelt.

Diese Deck- und Sichtschicht besteht in dem hier beschriebenen Ausführungsbeispiel zu etwa 75 Gewichtsprozent aus feinen Lederteilchen, wie Lederspänen mit einer Länge von etwa 2 mm, etwa 5 Gewichtsprozent textilen, vernadelbaren Fasern und 20 Gewichtsprozent einer die gesamte Deck- und Sichtschicht stärkenden, mit den Lederteilchen und den Fasern verbundenen abriebfesten Kunststoffmasse aus einem Polymer, wie einem Polyurethan.

Diese Kunststoffmasse, die - hier - nicht nur die gesamte Deck- und Sichtschicht durchdringt, sondern auch auf der Oberfläche derselben vorhanden ist, verleiht im gebundenen Zustand dem Boden- und Wandbelag eine geschlossene Oberfläche auf der Sichtseite.

Damit die Masse die Sichtschicht durchdringt, wird bei der Herstellung das noch nicht gebundene Kunststoff-Material in Form von Pulver auf den genadelten Belag gegeben und durch Rütteln des Belages dringt das Pulver mehr oder weniger weit in die Deck- und Sichtschicht ein und durchdringt diese. Bei den meisten Anwendungen wird so viel Pulver auf die Deck- und Sichtschicht aufgegeben, dass auch die Oberseite der Faseraggregate nach dem Verbinden des Kunststoff-Materials noch von der Masse bedeckt ist.

Das Verbinden erfolgt durch Erwärmen bzw. Erhitzen des Boden- und Wandbelages bis zur Bindetemperatur des Kunststoff-Materials, wobei dieses Erwärmen bzw. Erhitzen vor oder gleichzeitig mit einem Kalandern des Boden- und Wandbelages erfolgen kann.

Bei besonderen Ausführungen der Erfindung, bei der eine oben glatte Oberfläche des Boden- und Wandbelages erwünscht ist, wird auf die Sichtschicht eine größere Menge von pulverförmigen Kunststoffmaterial aufgegeben oder es wird auf die Deck- und Sichtschicht eine Lage von pastösen Kunststoff-Material aufgebracht und heiß kalandert. Danach wird eine ebene Oberfläche auf der Sichtseite des Boden- und Wandbelages erhalten, durch die hindurch die Struktur und Musterung der Deck- und Sichtschicht erhalten wird, wenn die gebundene Masse nach dem Abbinden transparent bleibt.

Das Verfahren zur Herstellung des erfindungsgemäßen Boden- und Wandbelages ist nicht Gegenstand vorliegender Erfindung und dem Fachmann sind die einzelnen Arbeitsschritte als solches bekannt, soweit sie nicht hier beschrieben wurden.

## Patentansprüche

1. Abriebfester, wasserfester Boden- und Wandbelag im wesentlichen aus nachwachsenden Rohstoffen mit einer Deck- und Sichtschicht und mit einer Trägerschicht, **dadurch gekennzeichnet, dass**
- die Deck- und Sichtschicht zumindest passiv vernadelbare Lederteilchen aufweist, die mit der Trägerschicht mittels Vernadelungs-Fasern vernadelt und mittels einer Bindemasse abgebunden sind,
- wobei mindestens die Oberfläche der Deck- und Sichtschicht durch diese Bindemasse abrieb- und wasserfest ausgebildet ist,
- die Deck- und Sichtschicht zwischen 40% und 80% Lederteilchen aufweist, und
- die Lederteilchen kleine Lederspäne sind.

2. Boden- und Wandbelag nach Anspruch 1, **dadurch gekennzeichnet, dass** die Lederteilchen schmale Lederspäne mit einer Länge von 3 bis 20 mm sind.

3. Boden- und Wandbelag nach Anspruch 2, **dadurch gekennzeichnet, dass** der Boden- und Wandbelag aktiv vernadelbare textile Fasern aufweist.

4. Boden- und Wandbelag nach einem der vorhergehenden Ansprüche, **dadurch gekennzeichnet, dass** die Fasern grob oder fein sind, farbig sind und vorzugsweise unterschiedliche Farben aufweisen.

5. Boden- und Wandbelag nach einem der vorhergehenden Ansprüche, **dadurch gekennzeichnet, dass** die Deck- und Sichtschicht neben den Lederteilchen noch Fasern, insbesondere Wollfasern, Jute- oder Baumwollfasern aufweist.

6. Boden- und Wandbelag nach einem der vorhergehenden Ansprüche, **dadurch gekennzeichnet, dass** die Oberfläche der Deck- und Sichtschicht durch einen gezielten Nadelprozess strukturiert ist.

7. Boden- und Wandbelag nach einem der vorhergehenden Ansprüche, **dadurch gekennzeichnet, dass** die Optik der Deck- und Sichtschicht ganz oder zumindest zum Teil durch die Wahl der Vernadelungs-Fasern beeinflusst ist.

8. Boden- und Wandbelag nach einem der vorhergehenden Ansprüche, **dadurch gekennzeichnet, dass** zumindest ein Teil der Vernadelungs-Fasern farbig ist und vorzugsweise zumindest ein Teil der Vernadelungsfasern grob ist.

9. Boden- und Wandbelag nach einem der vorhergehenden Ansprüche, **dadurch gekennzeichnet, dass** die Lederteilchen zumindest teilweise gefärbt sind.

10. Boden- und Wandbelag nach Anspruch 9, **dadurch gekennzeichnet, dass** farblich und / oder größenmäßig voneinander unterschiedliche Lederteilchen muster - und kontrastbildend in der Deck- und Sichtschicht vorliegen.

11. Boden- und Wandbelag nach einem der vorhergehenden Ansprüche, **dadurch gekennzeichnet, dass** die Lederteilchen mit anderen passiv oder aktiv nadelbaren kleinen Stückchen in der Deck- und Sichtschicht gemischt vorliegen, vorzugsweise die anderen nadelbaren Stückchen Faserkugeln, Holzteilchen, Kunststoffteilchen oder Textilteilchen sind.

12. Boden- und Wandbelag nach einem der vorhergehenden Ansprüche, **dadurch gekennzeichnet, dass** die textilen Fasern natürliche und / oder künstliche Fasern sind und vorzugsweise aktiv nadelfähig sind.

13. Boden- und Wandbelag nach einem der vorhergehenden Ansprüche, **dadurch gekennzeichnet, dass** die Trägerschicht aus einem Gelege, einem Gewebe, einem Spunbond oder einem Non-woven besteht.

14. Boden- und Wandbelag nach einem der vorhergehenden Ansprüche, **dadurch gekennzeichnet, dass** die Bindemasse ein Naturlatex, ein synthetischer Latex, ein flüssig eingebrachtes und abgebundenes Polyurethan ist.

15. Boden- und Wandbelag nach einem der vorhergehenden Ansprüche 1-13, **dadurch gekennzeichnet, dass** die Bindermasse aus einem transparenten polymeren Material besteht, durch das die Lederteilchen und die Fasern sichtbar sind.

16. Boden- und Wandbelag nach einem der vorhergehenden Ansprüche, **dadurch gekennzeichnet, dass** der Bindermasse bindungsverstärkende und / oder abriebverhindernde Stoffe beigemischt sind.

17. Boden- und Wandbelag nach einem der vorhergehenden Ansprüche, **dadurch gekennzeichnet, dass** der Bindermasse Farbstoffe in Lösungsform und / oder Pigmentform beigemischt sind.

18. Boden- und Wandbelag nach einem der vorhergehenden Ansprüche, **dadurch gekennzeichnet, dass** auf der Deck- und Sichtschicht eine Lage einer besonders abriebfesten Polymer-Schicht angeordnet sind und vorzugsweise diese Polymer-Schicht aus einem Acrylat, einem Polyurethan, Polyethylen und dessen Derivaten, aus einem anderen Polymer oder aus einem Gemisch derselben besteht.

19. Boden- und Wandbelag nach Anspruch 18, **dadurch gekennzeichnet, dass** die auf der Deck- und Sichtschicht angeordnete besonders abriebfeste Polymer-Schicht in Form eines Filmes oder in Pulverform auf die Deck- und Sichtschicht aufgebracht ist und farbig oder transparent ist.

## Claims

1. Abrasion-resistant, waterproof floor- and wallcovering in essence made of renewable raw materials with an outer visible layer and with a backing layer, **characterized in that**
- the outer visible layer comprises at least passively needleable leather particles, needled to the backing layer by means of needling fibres and bound by means of a binder composition,
- where the said binder composition renders at least the surface of the outer visible layer abrasion-resistant and waterproof,
- the outer visible layer comprises from 40% to 80% of leather particles,
and
- the leather particles are small pieces of leather waste from cutting processes.

2. Floor- and wallcovering according to Claim 1, **characterized in that** the leather particles are narrow, small pieces of leather waste from cutting processes with a length of from 3 to 20 mm.

3. Floor- and wallcovering according to Claim 2, **characterized in that** the floor- and wallcovering comprises actively needleable textile fibres.

4. Floor- and wallcovering according to any of the preceding claims, **characterized in that** the fibres are coarse or fine, are coloured fibres, and preferably comprise different colours.

5. Floor- and wallcovering according to any of the preceding claims, **characterized in that** the outer visible layer also comprises, alongside the leather particles, fibres, in particular wool fibres, jute fibres or cotton fibres.

6. Floor- and wallcovering according to any of the preceding claims, **characterized in that** the surface of the outer visible layer has structuring by virtue of a specific needling process.

7. Floor- and wallcovering according to any of the preceding claims, **characterized in that** the selection of the needling fibres controls, entirely or at least to some extent, the optical properties of the outer visible layer.

8. Floor- and wallcovering according to any of the preceding claims, **characterized in that** at least some of the needling fibres are coloured fibres and preferably at least some of the needling fibres are coarse fibres.

9. Floor- and wallcovering according to any of the preceding claims, **characterized in that** at least some of the leather particles are coloured particles.

10. Floor- and wallcovering according to Claim 9, **characterized in that**, in the outer visible layer, leather particles differing from one another in colour and/or in size form a pattern and provide contrast.

11. Floor- and wallcovering according to any of the preceding claims, **characterized in that**, in the outer visible layer, the leather particles are present together with other passively or actively needleable small particles, where the other needleable particles are preferably fibre balls, wood particles, plastics particles or textile particles.

12. Floor- and wallcovering according to any of the preceding claims, **characterized in that** the textile fibres are natural and/or synthetic fibres and are preferably actively needleable.

13. Floor- and wallcovering according to any of the preceding claims, **characterized in that** the backing layer is composed of a laid scrim, of a woven, of a spunbond or of a non-woven.

14. Floor- and wallcovering according to any of the preceding claims, **characterized in that** the binder composition is a natural latex, a synthetic latex, or a polyurethane introduced in liquid form and hardened.

15. Floor- and wallcovering according to any of the preceding Claims 1-13, **characterized in that** the binder composition is composed of a transparent polymeric material by way of which the leather particles and the fibres are visible.

16. Floor- and wallcovering according to any of the preceding claims, **characterized in that**, admixed with the binder composition, there are substances that promote binding and/or that inhibit abrasion.

17. Floor- and wallcovering according to any of the preceding claims, **characterized in that**, admixed with the binder composition, there are dyes in solution form and/or in pigment form.

18. Floor- and wallcovering according to any of the preceding claims, **characterized in that** the arrangement has, on the visible outer layer, a particularly abrasion-resistant polymer layer, where the said polymer layer is preferably composed of an acrylate, of a polyurethane, of polyethylene or its derivatives, of another polymer, or of a mixture of the same.

19. Floor- and wallcovering according to Claim 18, **characterized in that** the particularly abrasion-resistant polymer layer arranged on the outer visible layer has been applied in the form of a film or in powder form to the visible outer layer, and is a coloured or transparent layer.

## Revendications

1. Revêtement de sol et mural résistant à l'usure, résistant à l'eau, essentiellement constitué de matières premières renouvelables, présentant une couche de recouvrement et visible et une couche support, **caractérisé en ce que**
- la couche de recouvrement et visible présente des particules de cuir pouvant au moins être aiguilletées passivement, qui sont aiguilletées à la couche support au moyen de fibres d'aiguilletage et liées au moyen d'une masse de liant,
- au moins la surface de la couche de recouvrement et visible étant réalisée de manière résistante à l'usure et à l'eau par cette masse de liant,
- la couche de recouvrement et visible étant constituée par entre 40% et 80% de particules de cuir, et
- les particules de cuir étant de petits copeaux de cuir.

2. Revêtement de sol et mural selon la revendication 1, **caractérisé en ce que** les particules de cuir sont des copeaux de cuir étroits, présentant une longueur de 3 à 20 mm.

3. Revêtement de sol et mural selon la revendication 2, **caractérisé en ce que** le revêtement de sol et mural présente des fibres textiles pouvant être aiguilletées activement.

4. Revêtement de sol et mural selon l'une quelconque des revendications précédentes, **caractérisé en ce que** les fibres sont grossières ou fines, sont colorées et présentent de préférence des couleurs différentes.

5. Revêtement de sol et mural selon l'une quelconque des revendications précédentes, **caractérisé en ce que** la couche de recouvrement et visible contient, outre les particules de cuir, encore des fibres, en particulier des fibres de laine, de jute ou de coton.

6. Revêtement de sol et mural selon l'une quelconque des revendications précédentes, **caractérisé en ce que** la surface de la couche de recouvrement et visible est structurée par un procédé d'aiguilletage ciblé.

7. Revêtement de sol et mural selon l'une quelconque des revendications précédentes, **caractérisé en ce que** l'aspect visuel de la couche de recouvrement et visible est influencé totalement ou au moins en partie par le choix des fibres d'aiguilletage.

8. Revêtement de sol et mural selon l'une quelconque des revendications précédentes, **caractérisé en ce qu'**au moins une partie des fibres d'aiguilletage est colorée et de préférence au moins une partie des fibres d'aiguilletage est grossière.

9. Revêtement de sol et mural selon l'une quelconque des revendications précédentes, **caractérisé en ce que** les particules de cuir sont au moins partiellement teintes.

10. Revêtement de sol et mural selon la revendication 9, **caractérisé en ce que** des particules de cuir différentes les unes des autres par la couleur et/ou la taille se trouvent en formant un modèle et un contraste dans la couche de recouvrement et visible.

11. Revêtement de sol et mural selon l'une quelconque des revendications précédentes, **caractérisé en ce que** les particules de cuir se trouvent mélangées avec d'autres petits morceaux pouvant être aiguilletés passivement ou activement dans la couche de recouvrement et visible, les autres morceaux pouvant être aiguilletés étant de préférence des billes de fibres, des particules de bois, des particules de matériau synthétique ou des particules textiles.

12. Revêtement de sol et mural selon l'une quelconque des revendications précédentes, **caractérisé en ce que** les fibres textiles sont des fibres naturelles et/ou synthétiques et peuvent de préférence être aiguilletées activement.

13. Revêtement de sol et mural selon l'une quelconque des revendications précédentes, **caractérisé en ce que** la couche support est constituée par un mat, un tissu, un filé-lié ou un non-tissé.

14. Revêtement de sol et mural selon l'une quelconque des revendications précédentes, **caractérisé en ce que** la masse de liant est un latex naturel, un latex synthétique, un polyuréthane introduit sous forme liquide et lié.

15. Revêtement de sol et mural selon l'une quelconque des revendications précédentes 1 à 13, **caractérisé en ce que** la masse de liant est constituée par un matériau polymère transparent, à travers lequel les particules de cuir et les fibres sont visibles.

16. Revêtement de sol et mural selon l'une quelconque des revendications précédentes, **caractérisé en ce que** la masse de liant est mélangée avec des substances renforçant la liaison et/ou empêchant l'usure.

17. Revêtement de sol et mural selon l'une quelconque des revendications précédentes, **caractérisé en ce que** la masse de liant est mélangée avec des colorants sous forme de solution et/ou sous forme de pigment.

18. Revêtement de sol et mural selon l'une quelconque des revendications précédentes, **caractérisé en ce qu'**une épaisseur d'une couche de polymère particulièrement résistant à l'usure est disposée sur la couche de recouvrement et visible et cette couche de polymère est de préférence constituée par un acrylate, un polyuréthane, un polyéthylène et ses dérivés, par un autre polymère ou un mélange de ceux-ci.

19. Revêtement de sol et mural selon la revendication 18, **caractérisé en ce que** la couche de polymère particulièrement résistant à l'usure, disposée sur la couche de recouvrement et visible est appliquée sous forme d'un film ou sous forme de poudre sur la couche de recouvrement et visible et est colorée ou transparente.
